# EUROPEAN PATENT APPLICATION

(11) **EP 0 616 408 A1**
(43) Date of publication of application: **21.09.1994**
(21) Application number: 93302048.9
(22) Date of filing: 18.03.1993
(51) Int. Cl.: H02J 7/00, G05F 1/59, H02M 3/07

(54) **Graded multi-voltage control circuit**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The present invention is to provide an effective newly designed circuit which can output graded multi-voltage, and further combine with linear or chopped solid switch member so as to attain low heat loss, non-sparkle multi-voltage switching and low ripple-wave PWM voltage output of graded linear or chopped wave and further feedback the limited current or set voltage output adjustment function.

## Description

### Summary of the Invention

Because battery is portable and mobile, it is widely used for various kinds of appliances, such as electric vehicles, etc. But the kind of storage, or fuel, or thermal, or sun-power battery has physical basic voltage. Generally speaking, we shall choose its voltage and capacity by means of its multiple series and supply it in accordance with the need of load by means of graded voltage, or control it by serial linear members, or operate it by chopped wave switches. This is an efficient circuit design mainly to provide a multi-output graded multi-voltage, and further by means of the action time difference between solid switch members and electromechanic switch members, the switching functions of low heat loss and non-sparkle multi-voltage can be attained.

### Brief Description of the Drawings

FIG 1 is a view of two-knife and two-throw switch multiple series diode for multi-voltage switch according to an embodiment of the invention.

FIG 2 is a view of linear adjustment voltage wave of multi-voltage.

FIG 3 is a view of chopped wave adjustment voltage wave of multi-voltage.

FIG 4 is a view of multi-voltage switch circuit of two-knife and two-throw switch.

FIG 5 is a view of multi-voltage switch circuit of single-knife switch.

FIG 6 is a view of using tree-branch switch circuit and series diode to form a multi-voltage circuit.

### Detailed Description of the Invention

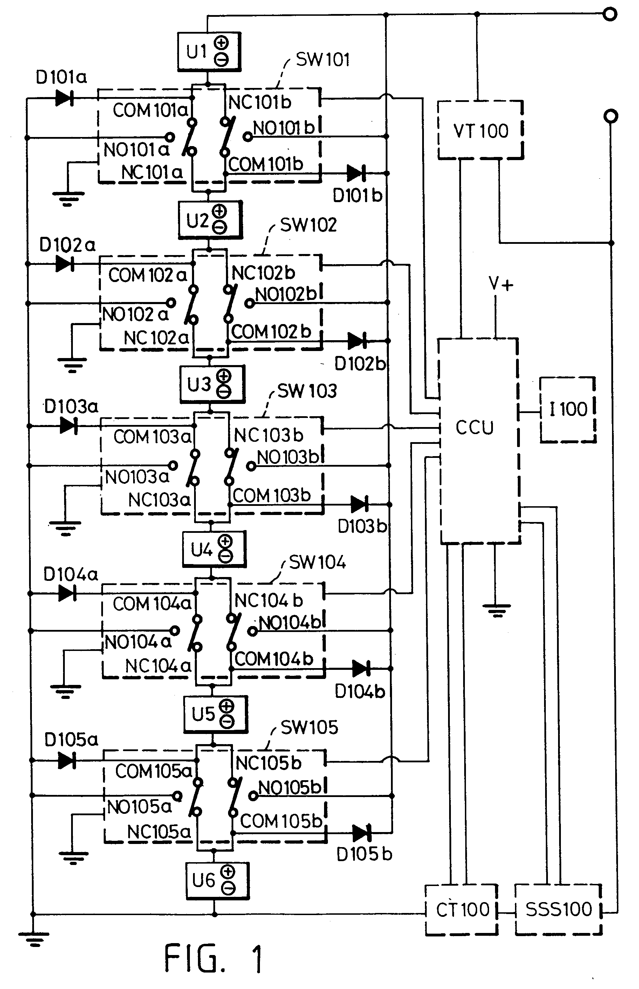

Now referring to FIG 1, a view of an embodiment of low heat loss, non-sparkle, graded multi-voltage control circuit for battery or multiple unit independent DC power supply, mainly by means of battery and serial two-throw (C) contact switch, it forms a multi-voltage output composed of alternative switch, and when outputting, it will make switch contact multiple series connect to segmented diode's two ends so as to eliminate diode's direct voltage reducing and thermal loss, and it can further combine with current inspection device and linear or switch-mode solid switch member, and combine with a central control unit (CCU) to accept operation order of input device instruction so as to control electric-mechanical switch and solid switch member for adjusting output voltage current flow or adjusting the output constant voltage, or set the limits of output current value, or constant current and "by means of linear adjustment or solid switch member of PWM adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output which forms between valley bottom voltage and peak and is controlled by adjustable linear, or PWM of it", or when electric-mechanical switch is turned on, the time of operation of solid switch (on) is suspended at the on position, when it is turn off, the operation time of solid switch (off) precedes the electric-mechanic to cut off power supply and reach the non-sparkle on-off electric- mechanical switches. This function further comprises the non-sparkle turning on/off of positive/negative polar on/off switch of output side.

The structure and operation of the embodiment are disclosed as follows:
two sets or more than two sets of battery units of same voltage, same capacity, or at least of same voltage, including linear or quadratic storage battery, or sun-power battery, or fuel battery, or thermal battery, by means of more than two-knife manual two-throw switch, or drum switch, or electric-mechanical switch members, such as magnetic or mechanical operated relay, etc., which are disposed between battery units and tends to be in direct-polar series with battery, said battery includes a single or multiple series, or multipled, or multipled series to be a battery unit; common contacts of two sets of different knife of two-knife switch are in replacement series with the open contact; that is, the common contact of knife A is connected to close contact of knife B, and the common contact of knife B is connected to close contact of knife A; and each connected contact is respectively connected to positive and negative pole of battery unit; each common contact of switch is connected to the positive pole of the knife unit, and its common contact is in direct multipled series with diode and connects to its open contact and further to the first battery unity and output positive end; common contact of each switch is connected to the negative end of knife unit, its contact and open contact are in direct series with diode, and is connected from open contact to the negative pole of the last battery and outputs negative end; said electric-mechanical switch member can be composed of directly manual switch, or magnetic driven, or driven by other mechanism.

Said systematic operation has the following function and advantages:

1. According to the common divisor symmetric to on/off switch, added to wholly open or wholly close contacts, it can provide multiple choice for multi-voltage output.
2. When output, all multiple contacts of diode are tended to close so that they can eliminate direct pressure drop and thermal loss of diode.
3. When turned on/off, diode provides linear graded voltage for lessening switch voltage, and used as transient current path to prolong the life of switch contact.
4. Power unit on-off switch or solid switch member can be further selected to be two-phase conductive member or devised in inverse-direction at the same time so as to provide for control over the input voltage and current, or the serial and multiple situation of on-off power unit when it is inversely input from the output end, and for control over solid switch member (if there is one) so as to fit the situation of external input power.

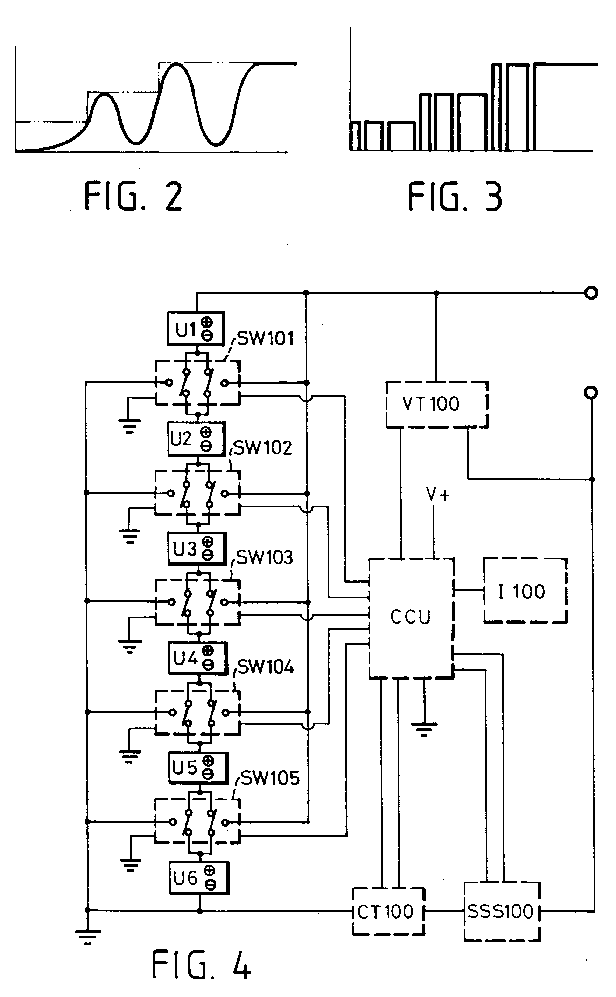

Take the embodiment in FIG 1 for example, composed of switch SW101-SW105 between six sets of battery units U1-U6 and five intermingled battery units, each switch has diode D101a-105a according to said principle, its input end multiples to pass negative output end; D101b-105b output end multiples to pass positive output end; when common contact and close contact of operating switch SW101-105 are tended to close , all battery units are multipled and in series with output voltage which is 6 × EB; that is, every three sets of battery units tend to be serialized and then multiplized; when SW102 and SW104 are controlled to be common contact and be converted to connect with open contact, output voltage will be 2 × EB; that is, every two battery units are serialized and then multiplized; when switch SW101-SW105 are controlled to be common contact and be converted to connect with open contact, output voltage will be EB; that is, battery unit U1-U6 are multiplized. If we use 24 sets of voltage to construct for battery units, we get multi-voltage grades of 1 × EB, 2 × EB, 3 × EB, 4 × EB, 6 × EB, 8 × EB, 12 × EB, 24 × EB; If we use 36 sets of voltage unit, we get 1 × EB, 2 × EB, 3 × EB, 4 × EB, 6 × EB, 9 × EB, 12 × EB, 18 × EB, 36 × EB, all the graded multi-voltage output is formed by battery unit multiple value according to the common divisor of battery units, others are analog of this example and need not to be mentioned here. Said switch unit can be manual, or be controlled by a central control unit (CCU) and directory input unit I 100 so as to control said switch unit to turn multi-voltage on/off; or to further serialize linear or switch open solid switch member SSS 100 at the output terminal so as to adjust and control the electric-mechanical switch operation situation and solid switch work situation which is relative to input value, the situations are as follows:
directly by means of linear solid switch member, trim the output of graded voltage or by means of controlling electric-mechanical switch, make the output higher than the needed output value, and then use the central control unit (CCU) to control the driven current of linear solid switch member so as to get the adjustment of linear output voltage; referring to FIG 2, if we want to trim the adjustment of a large voltage larger than a unit of battery units voltage potential grade, we can do it by means of electric-mechanical switch unit and its thermal loss will be reduced; directly by means of switch solid switch member, trim the output of graded voltage or by means of controlling electric-mechanical switch, make the output higher than the needed output value, and then use the central control unit (CCU) to control the driven pulse range of switched solid switch member so as to get the adjustment of average output voltage; referring to FIG 3, if we want to trim the adjustment of a large voltage larger than a unit of battery units voltage potential grade, we can do it by means of electric-mechanical switch unit, because it has graded basic voltage, ripple-wave value is lower than that of wave-loaded adjustment of the whole voltage directly.

We can further serialize an inspection device CT100 to the output circuit so as to inspect its output current value feeding back to central control unit (CCU), according to the input unit instruction or the preset value in CCU, and control mutually and relatively electric-mechanical switch and solid switch, and at the output terminal it multiplized inspection device VT100 so as to inspect its output voltage value which feeds back too CCU, and in accordance with instructions of input unit, or with the mutual control of solid switch and electric-mechanical switch of preset value in CCU. Similar to the conventional steady voltage circuit, because this circuit has a standard potential, in addition to adjusting the voltage change caused by unsteady load, it can adjust loaded side voltage change caused by unsteady power voltage. For example, voltage drops in a battery because storage is reduced, or voltage is unsteady in a sun-power battery because sunlight amount is changed.

Besides, the most important thing is that by means of the following controlled order, we may achieve the following functions: when switching electric-mechanic switch, at the "on " position, solid switch (on) operation time suspends after the electric-mechanic switch, at the "off" position, solid switch (off) operation time precedes electric-mechanic switch to turn the power off so as to attain non-sparkle on/off electric-mechanic switch, this switch further includes non-sparkle switching of positive and negative polar on/off switch of output side.

Said set operation order includes mode of manual, electric magnetic, mechanic, and flow control, according to said switch operation order, it may be locked up or delayed by mechanic order, or order locked up or delayed by circuit.

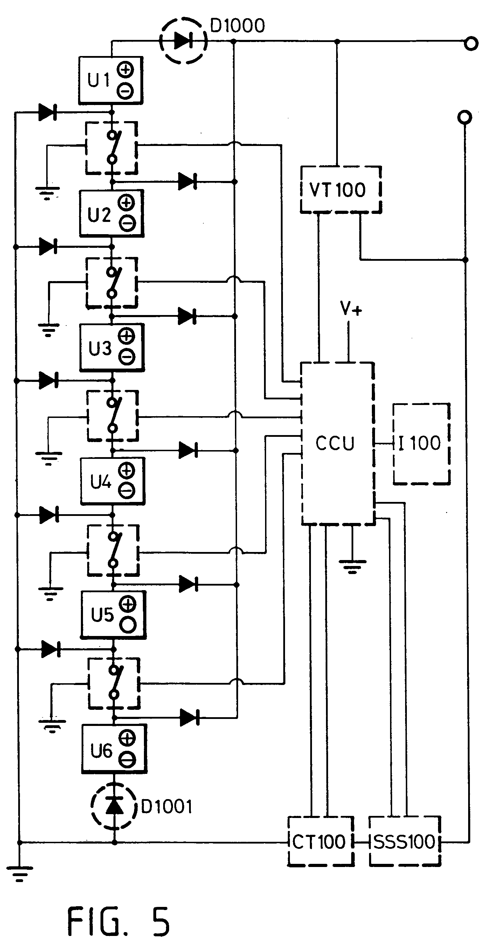

This kind of circuit, when put into practical uses, if power capacity is lower, diode can be omitted, too, and two-knife two and two-throw switch can directly turn on/off other function. The same as the embodiment in FIG 1, when using, it can further connect to solid switch member and output voltage current inspection member and by means of input unit and central control unit CCU, it has various function. FIG 4 is a view of multi-voltage switch circuit of two-knife and two-throw switch.

If circuit efficiency is available and application is limited by space, we can connect single-knife single-throw switch to diode so as to produce on/off switching multi-voltage output function, in application we can further connect solid switch member and output voltage current inspection member and by means of input unit, CCU produces various same function. FIG 5 is a view of multi-voltage switch circuit of single-knife switch. In FIG 5, D1000 and D1001 are diodes for average pressure used to provide battery multipled for average voltage, can be disposed on it when needed.

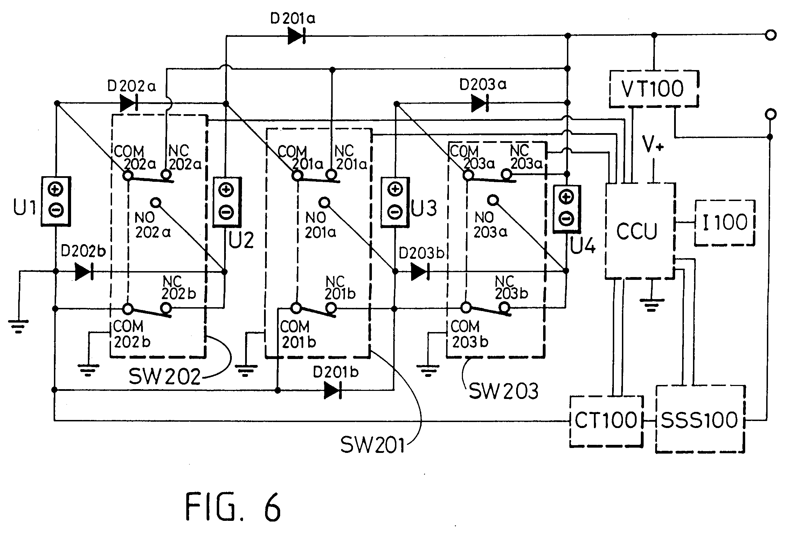

Moreover, electric-mechanic switch serialized between voltage units in said circuit can be replaced by solid switch member, and connect to diode so as to form multi-voltage output. Referring to FIG 6, a view of multi-voltage switch composed of solid switch and diode, in this circuit its switching function is the same as that of FIG 5, in FIG 6, D1000 and D1001 are diodes for average pressure used to provide battery multi pled for average voltage, can be disposed on it when needed, because switch member which is serialized between battery units can further connect to CCU and input unit and output voltage current inspection member to form continual adjustment or output voltage and current control between said graded voltage.

In this kind of design, we can further dispose electric-mechanic switch contact on both sides of solid switch member to form SSU101--SSU105. By means of following operation order, it can reduce voltage drop, loss, and heat; the operation order of this circuit is as follows:

At "on" position, the (on) operation of solid switch is before electric-mechanic switch.

At "off" position, the (off) operation of solid switch is after electric-mechanic switch.

When solid switch is used as linear control or PWM switch control, electric-mechanic switch which is serialized to it will not operate; said solid switch and electric-mechanic switch can be controlled by CCU, or manually, or electric-magnetically, or mechanically, or fluid dynamically controlled.

Another application of said circuit is shown in FIG 6, an embodiment of serialized multi-voltage circuit, it consists of two sets or more than two sets of battery units of same voltage, same capacity, or at least of same voltage, and by means of branch connected switches to switch on/off and change their serialized and multiplized situation so as to further change their output voltage; when outputting, it will make switch contact multiple series connect to segmented diode's two ends so as to eliminate diode's direct voltage reducing and thermal loss, and it can further combine with current inspection device and linear or switch-mode solid switch member, and combine with a central control unit (CCU) to accept operation order of input device instruction so as to control electromechanical switch and solid switch member for adjusting the output voltage, or set the limits of output current value, and by means of linear adjustment or solid switch member of PWM adjusting control which is disposed serially in battery and diode and between their on/off switches of switch multi-voltage output, the low pressure becomes valley and high pressure of second section becomes peak for the circuit of linear continual adjustment and PWM adjustment of output voltage, and becomes the low ripple-wave voltage output which forms between valley bottom voltage and peak and is controlled by adjustable linear, or PWM of it, or when electromechanical switch (on) is suspended at the on position, when it is turned off, the operation time of solid switch (off) precedes the electromechanical switch to cut off power supply and reach the non-sparkle on/off electro- mechanic switches: This function further comprises the non-sparkle turning on/off of positive/negative polar on/off switch of output side.

In conclusion, object of the present invention is to provide an effective newly designed circuit which can output graded multi-voltage, and further combine with linear or chopped solid switch member so as to attain low heat loss, non-sparkle multi-voltage switching and low ripple-wave PWM voltage output of graded linear or chopped wave and further feedback the limited current or set voltage output adjustment function, it is so unique, newly designed, and practical, please examine it in accordance with the law.

## Claims

1. A power supply comprising a plurality of batteries (V1-V6) arranged in a sequence between positive and negative output terminals, with switching means (SW101-SW105) between each battery and the next in sequence and with computer control means (CCU) for operating the switching means, characterises in that the switching means each comprise a double-pole double-throw switch arranged either to connect each battery to the next in series, or to connect the poles of two consecutive batteries each to the output terminal of like polarity.

2. A power supply according to claim 1 in which each battery pole other than the endmost is connected through a diode (101a - 105b) to the output terminal of like polarity, the sense of the diode being such as to conduct current from the battery to the output terminal, whereby the diodes provide a path for transient currents on opening or closing of the switch contacts.

3. A power supply according to claim 1 or claim 2 including a current sensor (CT100) and/or a voltage sensor (VT00) providing input signals to the computer control means to control the operation of the switches so as to provide a required output waveform.

4. A power supply according to claim 3 further including solid sector switching means (SSS100) connected in series with the output terminal and controlled by the computer control means to provide a continuously controlled output voltage or current.
